(19)

Europäisches
Patentamt
European
Patent Office
Office européen
des brevets

(11) **EP 4 530 986 A1**

(12) **EUROPEAN PATENT APPLICATION**

(43) Date of publication:
**02.04.2025 Bulletin 2025/14**

(21) Application number: **23199953.3**

(22) Date of filing: **27.09.2023**

(51) International Patent Classification (IPC):
**G06T 11/00** $^{(2006.01)}$

(52) Cooperative Patent Classification (CPC):
**G06T 11/006;** G06T 2200/24; G06T 2211/441

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.
5656 AG Eindhoven (NL)**

(72) Inventors:
• **SIMON, Matthias**
  **Eindhoven (NL)**
• **SCHNELLBÄCHER, Nikolas David**
  **Eindhoven (NL)**
• **SCHAEFER, Dirk**
  **5656AG Eindhoven (NL)**

(74) Representative: **Philips Intellectual Property &
Standards
High Tech Campus 52
5656 AG Eindhoven (NL)**

(54) **COARSE PREVIEW FUNCTIONALITY FOR INTERACTIVE IMAGE RECONSTRUCTION CONTROL**

(57)     System (PVS) and related method for facilitating tomographic image reconstruction The system may include an input interface (IN) through which is receivable a parameter setting (P) for a tomographic reconstruction pipeline (RP) for reconstruction in image domain, based on projection data (λ) collectable by a tomographic imaging apparatus (IA). On receipt of parameter setting (P), interface is causing a preview provider (PRP) to compute at least one tomographic image (m), including at least one preview tomographic image associable with the received parameter setting (P). The tomographic image may be displayed on a display device (DD). The system allows rapid reviewing of various parameter setting.

**FIG. 3**

EP 4 530 986 A1

**Description**

FIELD OF THE INVENTION

The invention relates to a system for facilitating tomographic image reconstruction, to a related method, to an imaging arrangement including such a system, to a computer program element and to a computer readable medium.

BACKGROUND OF THE INVENTION

Imaging is an important tool in the arsenal of the medical practitioner. One such tool is X-ray imaging, which allows acquiring imagery of the internals of patients in a non-invasive manner. Patients are exposed to X-radiation from the outside. The X-radiation passes through patient tissue, and is then detected at a detector of the imaging apparatus. In this manner, projection data may be obtained. Projection data may be used as projection imagery, such as in radiography protocols. However, sometimes it is cross-sectional imagery that is more appropriate for the medical task at hand. For this purpose, the projection imagery can be computationally processed by reconstruction algorithms to obtain the said cross-sectional imagery. Cross-sectional imagery can help in diagnosis and/or in therapy by revealing details otherwise not available in projection imagery as intervening anatomies along the projection direction may cause structures to superimpose in the projection imagery, thus potentially obscuring crucial details.

Cross-sectional imaging, also called tomographic imaging, is available for many modalities, such for CT (computed tomography) or mammography (both X-ray based), nuclear imaging (SPECT[single photon emission computed tomography]/PET[positron emission tomography]), MRI (Magnetic Resonance Imaging), OCT (optical coherence tomography), US (ultrasound) tomography, and others.

Different types of reconstruction algorithms exist, including iterative reconstruction algorithms. Iterative reconstruction algorithms proceed in iterations to compute a sequence of intermediate images that may converge to a final result, the desired cross-sectional image. There are also other types of reconstruction algorithms.

Reconstruction algorithms, useful as they are, may draw considerable computational resources.

Reconstruction algorithms may be run as part of data processing pipeline ("chain"). A full image reconstruction chain may include a large number of internal parameters which may have a bearing on the reconstruction result. Due to computational cost considerations, these are often set to provide "one-size-fits-all" reconstruction solutions with presets, and cannot be changed by user after image reconstruction is complete. Many of these internal parameters may need to be set early in the development cycle and are not accessible to clinical users in their field work.

SUMMARY OF THE INVENTION

There may therefore be a need for improved tomographic imaging. In particular, more flexible and/or responsive tomographic imaging setups may be called for.

An object of the present invention is achieved by the subject matter of the independent claims where further embodiments are incorporated in the dependent claims. It should be noted that the following described aspect of the invention equally applies to the system, the related method, the imaging arrangement, to the computer program element and to the computer readable medium.

According to a first aspect of the invention there is provided a system for facilitating tomographic image reconstruction, comprising:

an input interface through which is receivable a parameter setting for a tomographic reconstruction pipeline for reconstruction in image domain, based on projection data collectable by a tomographic imaging apparatus;
wherein, on receipt of parameter setting, the said interface is capable of causing a preview provider to compute at least one tomographic image, including at least one preview tomographic image associable with the received parameter setting, the at least one tomographic image being for display on a display device. Thus, the tomographic image may be displayed on the display device.

The system allows rapid reviewing of various reconstruction pipeline parameter settings. The parameter setting may be arbitrarily set by a user, not constrained by any system preset(s). This allows better exploration of different parameter setting options, and how the parameter setting(s) effects reconstruction results as manifest by the respective preview imagery. A single preview (image) may suffice, but there may be plural such settings and associated previews, at least one such preview image for each setting received. In embodiments, at least parts of the parameters in one or more of the parameter stetting(s) is different from a setting for a final image to be reconstructed, and is such that it incurs in general less CPU time than the final image. Thus, the (some or each) preview image can be delivered more responsively than the final image. The final image is the one that may be used by the user for the intended purpose of the imaging task, such as diagnostic, or other.

In embodiments, the system is configurable for dynamic preview support, wherein the interface is capable to repeatedly cause reconstruction of different such preview images on receipt of different such parameter settings.

In embodiments, the different such parameter settings may be part of a final parameter setting associable with a final image, including at least some of the parameter setting of at least one of the preview images.

In embodiments, the parameter setting, or the different such one or more parameter settings, include one or more parameters for any one or more of i) definition of a subset in an image domain for the at least one tomographic image is to be reconstructed; ii) a resolution in image domain for the tomographic image, iii) a filter/de-noising component of the pipeline, iv) a reconstruction component of the pipeline, the reconstruction component capable of mapping the projection data from projection domain into voxel positions in the said image domain.

In embodiments, the said subset is smaller than a size of a region of interest, ROI, in respect of which the, or a, final image is to be reconstructed. "Final" as used herein refers to reconstruction at any one of more of resolution, ROI size, projection data sparseness that is considered diagnostic for the imaging task at hand, with corresponding applicable IQ (image quality), for example as per medical imaging protocol. In contrast, the preview imagery may not need to have the same IQ in all aspects, in particular not in relation to what is referred to herein as "booster" parameters, such as the said resolution, ROI size, sparseness, reconstruction algorithm run-time, etc. Such booster as those parameters that have in general a bearing one responsiveness of the reconstruction pipeline in returning preview imagery.

In embodiments, the parameter setting is provided by parameter setting provider, such as a segmentor and/or a user interface.

In embodiments, the user interface is capable of user interactive operation so as to allow the user to repeatedly define the different parameter settings.

In embodiments, the preview provider includes at least a part of the reconstruction pipeline.

In embodiments, the preview provider includes a trained machine learning model.

In embodiments, the imaging apparatus includes any one of: i) a computed tomography scanner, a C-arm imaging apparatus, a magnetic resonance imaging apparatus, an imaging apparatus configured for nuclear imaging, optical coherence tomography imaging apparatus, ultrasound imaging apparatus.

In another aspect there is provided an arrangement for imaging support, comprising the system of any one of the previous claims, and further comprising any one of more of: i) the imaging apparatus, ii) a graphics display generator for visualizing the one or more preview images on the display device, iii) the display device, iv) at least a part of the reconstruction pipeline, v), the preview provider, vi) the parameter setting provider.

In yet another aspect there is provided a method of facilitating tomographic image reconstruction, comprising: receiving, through at least one interface, a parameter setting for a tomographic reconstruction pipeline for reconstruction in image domain, based on projection data collectable by a tomographic imaging apparatus;

On receipt of receipt of such parameter setting, causing to compute at least one tomographic image, including at least one preview tomographic image associable with the received parameter setting, the at least one tomographic image being for display on a display device.

In another aspect there is provided a method of training the machine learning model.

In another aspect still, there is provided a computer program element, which, when being executed by at least one processing unit, is adapted to cause the processing unit to perform the method or the method of training.

In another aspect there is provided at least one computer readable medium having stored thereon the program element, or having stored thereon the (trained) machine learning model.

In another aspect there is provide use of an interface in tomographic reconstruction of tomographic preview imagery, the interface being such that through it is receivable a parameter setting for a tomographic reconstruction pipeline for reconstruction in image domain, based on projection data collectable by a tomographic imaging apparatus.

In some aspect there is provide a use of such interface is provided in a system of any embodiments or aspect as herein described.

In some aspect there provided a topographic reconstruction pipeline having such an interface.

The proposed system, which may be referred to herein as a preview system, allows efficient interfacing and control of the tomographic reconstruction pipeline. The preview system may be thought of as a management, coordinator or orchestrator component.

The preview system may be arranged in a cloud, edge, or local computing setting. The "heavy-lifting", that is, in general relatively high CPU (central processing unit) computing loads, such as in reconstruction algorithms, may be run offsite on one or more servers for example. The servers may be interacting in distributed computing setup, whilst the displaying/viewing/view port may run on a user device on site, such as on a tablet, smartphone, edge device, etc. In addition, the parameter setting may be done in the user device.

The preview images (in general there are more than one, but a single one may suffice in some circumstances) may provide rough-and-ready, or "coarse", information on image characteristics in image domain. This preview information may be sufficient for user to judge whether at least some the associated reconstruction parameter settings (referred herein simply as "parameter settings") may be adequate for present imaging needs. The preview image may be "coarse" as compared to the intended final image: it may have lower resolution, may be for a smaller ROI than intended, the reconstruction algorithm may be aborted earlier than when reconstruction the final image, use data with higher sparseness, etc. In general, some or each of the preview images garner less CPU time, are delivered with faster return time than the final reconstruction. In some instances, in order to achieve CPU time savings, the preview imagery may of lesser image quality, at least in some aspects (eg, size of ROI, resolution etc), but IQ may still be sufficient for user to judge image quality in others aspects of interest, such as in respect of image structure, textures, etc. However, such a reduced IQ may not be necessarily be sustained in all embodiments, in particular when using a dedicated ML learning model as preview provider, instead of the whole or parts of reconstruction pipeline itself for preview purposes.

The proposed preview system may allow accessing parameter settings in the reconstruction pipeline via the preview system's interface, and to trigger reconstruction of the preview imagery. Thus, the preview system may be thought of as a manager facility that may include capabilities to issue various triggers, may include events handler(s), API, etc that help orchestrate operation of the reconstruction pipeline, visualization of preview imagery, etc. The previewer system's interface may thus allow controlling the pipeline. Parts of the interface may be arranged at the reconstruction pipeline. The term " reconstruction pipeline" as used herein in generally relates to any computational arrangement, in software, in hardware, or partly in both, that is capable of delivering a computational tomographic result, such as the said one or more previews. Execution or processing in the pipeline may be in series, in parallel, or, at parts or times, both.

The preview provider may be outside the pipeline, as a standalone system, such as a (machine learning) ML previewer engine, or any other as mentioned above. Whilst ML is preferred, this is may not be needed in all embodiments. Alternatively, the preview provider includes some or all of the pipeline, as needed. Thus, in either case, by making the preview computationally cheaper to obtain than a full/final reconstruction, a processing time may be achievable that is acceptable for interactive use mode as mainly envisaged herein.

One "reconstruction) parameter setting may determine the size of the ROI in image domain to be reconstructed in preview phase. The size of such ROI for preview imagery may be chosen smaller than for the subsequent reconstruction of final image. Depending on the reconstruction pipeline ("chain") parameter, different sizes of preview ROIs may be picked. For example, for a denoising check, a standard deviation resolution, such as in a small ROI, would be suitable. The preview sample ROI may be very small to achieve very fast return times: A small set of voxels may just be enough for user to "get a feel" for image texture for the tissue type of interest, eg for liver tissue. There is no need at this preview stage/phase to set the ROI larger to cover all of the liver for example. This can be done later when running final reconstruction for the final image in full view/high(er) resolution, or by resetting other boosters, etc.

A parameter in the parameter setting may be a reconstruction parameter that determines, or has a bearing on, the manner in which the reconstruction algorithm populates voxels in image domain with image values based on projection data. Some or all parameters in the setting associated with the preview image that the user believes satisfies their imaging needs may be or equal to one of the settings used for reconstruction of final image. Thus, the preview system enables clinical user to choose at least some parameters that will later be applied for the whole volume/ROI to be reconstructed in the final image.

Despite the potentially large number of internal parameter settings inside the reconstruction pipeline, the proposed previewer allows user to still access such parameters and to adjust/tune same at acceptable computational cost. he proposed system may enable for example a ROI-preview facility, possibly integrated in a viewing applications/interface , which can "talk back" to the reconstruction pipeline . This allows quickly obtaining preview imagery at different "flavors" of a given one or more algorithm/components of the pipeline. The user can then use ROI preview to adjust parameters to best match the case and/or protocol specific requirements, and then later trigger a full (resolution) reconstruction for proper clinical/diagnostic assessment. This could for example be useful for an on-the-fly assessment of different denoising flavors, which are often implemented as image-based post-processing algorithms.

The parameter setting provider may include a ROI-selection mechanism, such as an interactive user interface.

The parameter setting provider may include a viewing interface which allows user to display a ROI-preview for a given case.

The parameter setting provider may include one or more interactive tuning elements (such as (continuous slider), discrete preset drop-down menu, etc. The parameter setting provider may be configured to allow tuning parameter settings on the fly, eg, via (continuous) GUI slider(s), some optional, discrete, preset(s) that a user can select from, eg, by using the drop-down menus, etc.

The complexity of such tuning elements depends on the number of parameters and algorithms which are preferably made accessible for interactive live ROI-preview.

The preview system's interface may include an application program interface (API) which enables communication between visualizer/viewing tools and the reconstruction pipeline/host such that interactive input from the tuning-element(s) trigger a new reconstruction of the given ROI(s) and displays these back in the viewing tool on display device.

The ROI-selection mechanism may be implemented or aided by a segmentor.

The user may still be kept in the loop and can also specify ROIs manually, eg, based on initial image (scout, surview)/planning data, and in this context also set the size and number of ROI(s) to use downstream.

For a side-by-side comparison of two parameter settings, the preview system can also allow for two or more viewports to show multiple settings at the same time.

The interface (eg, the said API) may connects the input from the human expert user in the loop using the viewing UI to the reconstruction engine. The reconstruction pipeline can in this context be an on-site reconstruction host, or a cloud-based on demand reconstruction engine.

This interface may trigger a new reconstruction ("recon") for the specified ROI(s) and feed it back to the viewing UI for live-assessment on-the-fly.

A low-resolution reconstruction instead of, or in addition to, the above-described small ROI(s) selection may be used for the preview phase/assessment. Choosing a sufficiently small low-resolution sampling, the preview will allow for several adjustments on-the-fly.

The proposed preview system may be used for controlling of filter components in the reconstruction pipeline, such as of a denoiser implementing a denoiser algorithm. The live previewing enabled by the proposed system may be useful in efficiently controlling for example a denoising strength before requesting a full field-of-view reconstruction. Other examples may include parameter tuning in a back-projection filter (or equivalent).

As used herein, "parameter setting" and the corresponding preview image (sometime simply referred to as "preview") are associable in the sense that the said preview image is obtained by reconstruction when the associated parameter setting is used. Thus, the association is mutual. In the following, the term "parameter setting" will be mostly used for the sake of brevity for "(tomographic) reconstruction parameter setting".

In the above, it will be understood that whilst reference is made to a parameter setting, this may indeed be reference to plural parameters that make up the setting. Thus, a parameter setting may include a vector or matrix of different parameter values. Each such parameter, or subset, or indeed all such parameters in the setting, relates to, such as may determine, different operational aspects of the reconstruction pipeline PR and/or of IQ (image quality), or of other aspects of imagery obtainable by reconstruction using such parameter(s) as per the setting.

*"user"* relates to a person, such as medical personnel or other, operating the imaging apparatus or overseeing the imaging procedure. In other words, the user is in general not the patient.

## BRIEF DESCRIPTION OF THE DRAWINGS

Exemplary embodiments of the invention will now be described with reference to the following drawings, which, unless stated otherwise, are not to scale, wherein:

Fig. 1 is a block diagram of a tomographic imaging arrangement;
Fig. 2 shows a block diagram of a reconstruction pipeline as may be used in embodiments of Fig. 1;
Fig. 3 shows components of a system facilitating tomographic imaging, in particular for providing preview imagery;
Fig. 4 illustrates operation of the system of Fig. 3 according to one embodiment; and
Fig. 5 shows a flow chart of a computer implemented method for facilitating tomographic imaging.

## DETAILED DESCRIPTION OF EMBODIMENTS

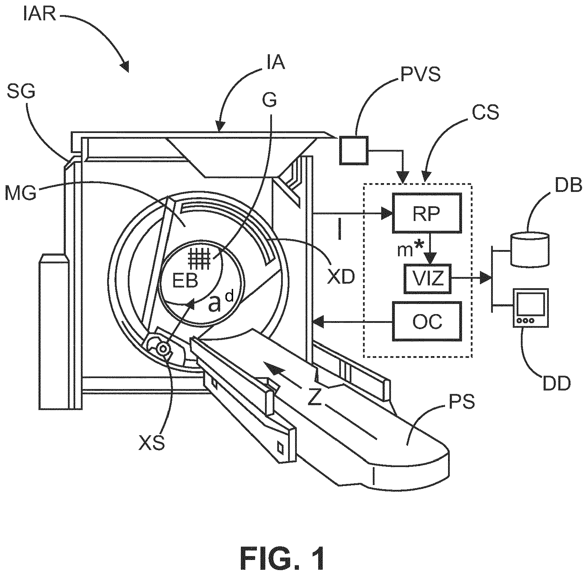

Reference is now made to the block diagram of Fig. 1 which shows an imaging arrangement IRA as envisaged herein in embodiments. The imaging arrangement IRA may include a tomographic imaging apparatus IA and a computing system CS for operational support of imaging. The imaging arrangement IRA may include a tomographic imaging apparatus IA operable to measured data $\lambda$, based on which tomographic imagery may be obtained, for example, at least in parts, by the said computing system CS.

As will be explained in more detail below, the arrangement IRA may include at least in parts a (sub-)system PVS for facilitating tomographic image reconstruction. Broadly, the system PVS may function as a preview imagery provider that provides, in a computationally cheap manner, preview imagery m. Such preview imagery m may allow a user to quickly find a correct reconstruction parameter setting P for the tomographic imaging task at hand. Once the correct, or in the user's view, best/correct setting P* has been so found, a final reconstruction of the desired final image m, based at least in parts on the so found parameter setting P*, may be done, or one of the preview images m so generated may be adopted as the final image m*, as the case may be. Thus, the preview system PVS allows a user to "sample" parameter space in a computationally feasible manner, that is, without incurring the high computational loads normally required for full reconstructions in 3D image domain as envisaged herein in most embodiments.

The preview system PVS may be arranged at the imager IA. For example, the preview system may be integrated into the imager IA, such as into the imager's operator console OC, or the preview system may be integrated in the supporting computing system CS, such as to follow an edge computing paradigm, as needed. Alternatively, at least parts of the preview system PVS may be arranged possibly remote from the imager IA, for example, in a client-server or Cloud setting. As said, the preview system PVS may be part of the general computing system CS that is used to support operation of the imager IA, but this may not necessarily be so in all embodiments. Thus, the preview system PVS may be a stand-alone system, at least in parts with at least some or all of its components, remotely arranged outside the computing system CS or imagery IA, on one or more servers, or any other computing system etc. Thus, the proposed system PVS may be practiced in a cloud setting, distributed computing, or other.

Before describing operation of the preview system PVS as envisaged herein in embodiments in more detail, other components of the system IRA may be explained below first in order to provide some context, thus aiding the subsequent more in-depth explanation of preview system PS.

Broadly, the imaging arrangement IRA may be envisaged herein for medical applications of any kind, however, other applications outside the medical realm are not excluded herein such as non-destructive testing or any other experimental imaging of any kind, or indeed in any tomographic imaging-based domain, where conservative use of computational resources is of concern. Thus, with the proposed preview system PVS, needlessly expending, for any sample reconstruction prior the final reconstruction, a high computational load is avoided. The user can thus "experiment" with different parameter settings in a responsive and computationally cheap manner to so find the, in their view, best or at least improved parameter setting for the image task at hand, rather than being pinned down by a standard, preset ( eg hardwired or inaccessible) settings, that may not serve well the given, individual imaging needs of user for the task at hand. Thus, thanks to the proposed preview system PVS, an undesirable situation can be avoided herein, where CPU time resources are spent for a full reconstruction based on such standard settings, only to then find the reconstruction is not fit for purpose.

The tomographic imaging apparatus IA is operable to generate, in particular acquire, projection data $\lambda$ which may be forwarded through a communication channel (wired, wireless, or partly both) to the computing system CS for reconstruction into tomographic (sectional) image(s). The computing system CS may run a reconstruction pipeline PR, which implements, possibly amongst other one or more image processing algorithms, one or more reconstruction algorithms. In general, such a reconstruction algorithm implements a mapping that maps projection data $\lambda$ located in projection domain into image domain G. Conceptually, the image domain is made up/defined as a set of grid points (voxels). Thus, image domain is a portion of 3D space, and is located in an examination region ER of the imaging apparatus, whilst the projection domain is in 2D, and is located at an (X-ray) detector XD of the imaging apparatus IA.

As said, the imaging apparatus IA is preferably of the tomographic type, preferably configured for multi-directional projection image acquisition. The imaging apparatus IA is thus capable of acquiring projection images $\lambda$ along different projection directions $\alpha^d$ relative to the examination region ER, and thus relative the anatomical region ("ROI") of interest of the patient to be imaged. Acquisition be done in embodiments by a rotational system where at least an X-ray source XS is arranged in a moveable gantry MG. The movable gantry (and with it the X-ray source XS in embodiments) is rotatable in a stationary gantry SG around the examination region ER in which the patient/ROI resides during imaging. Opposite the X-ray source in the movable gantry there is the X-ray detector XD which may rotate with the gantry and X-ray source around the examination region ER to realize the different projection directions $\alpha^d$. As schematically indicated in Fig. 1, patient's longitudinal or imaging axis Z may extend into the examination region ER during imaging. Patient PAT may lie on a patient support PS, such as a bed, which is positioned at least partly in the examination region ER during imaging. In some, but not all embodiments, helical imaging protocols are envisaged herein where there is a relative lateral motion along the longitudinal axis Z between X-ray source XS and the patient PAT. For example, the patient support PS may be advanced through the examination region ER during the multi-directional projection image acquisition, for example during rotation of the X-ray source XS around the patient.

The CT scanner setup as illustrated in Fig. 1 is merely according to one embodiment, and other tomographic imaging equipment such as C-arm or U-arm scanners, Cone beam CT arrangements, mammographic imagers, etc, are not excluded herein. In addition, the multi-directional acquisition capability may not necessarily result from a rotational system such as shown in Fig. 1. Non-rotational imaging systems are also envisaged, such as in CT scanners of the fourth or higher generation, where multiple X-ray sources are arranged around the examination region in a source annulus for example. In addition or instead, the detector XD may be arranged as a detector annulus around the examination region. Thus, in such systems there is no rotation of the X-ray source XS or detector XD, or of both.

There may be an operator console OC through which a user, such as medical user, may control imaging operation. For example, user may request initiating the image acquisition or may request reconstruction or other operations, or may initiate transmission of data to the computing system CS, or may halt such transmission as required. The console OC may be part of the supporting computing system CS.

During imaging, an X-ray beam issues forth, along the different projection directions $\alpha^d$, from a focal spot of the X-ray source(s) XS. The beam passes through the examination region ER with the patient in it. X-radiation beam interacts with patient tissue. The X-ray beam is modified as a result of this interaction. In general, such X-ray beam modification includes attenuation and scattering of the original incoming X-ray beam. The modified X-radiation is then detected as a spatial distribution of various intensities at X-ray sensitive pixels of the detector XD.

It is not necessary herein to acquire projection images $\lambda$ over a full 360° angular range around the examination region ER, but this can still be done. Acquisition over a partial angular range such as a range of 270°, 180°, or even less may be sufficient. The X-ray detector is preferably configured for acquisition of 2D projection images with rows and columns of intensity values as registered by the detector pixels. That is, the detector pixels themselves may be arranged in a matrix layout. Such a 2D layout may be used in divergent imaging geometries, such as cone or fan beam or others. However, one dimensional detector pixel layouts (such as along a single line) are not excluded herein, and neither are parallel beam geometries.

The reconstructed final or preview volumetric imagery $m*$, $m$ may be visualized by a visualizer VIZ. The visualizer VIZ may generate a graphics display of the volume or a given slice. The graphics display may be displayed on a display device DD. The visualizer VIZ may map a section of image volume $m*,m$ or the image volume $m*$, $m$ as a whole, onto a grey value or a color palette. The visualizer VIZ may control, via suitable interfaces, video circuitry to effect display of the graphics display on the display device DD.

The visualizer VIZ may include suitable software so as to visualize the reconstructed image data $m*$, $m$ on a display device DD. Thus, the visualizer may operate on data points (voxels) in the image domain, for such is the reconstructed image data, whether it is a preview image $m=mj$, the final image $m*$, or indeed an initial image $m0$, if needed (see below for more details on the use of such initial imagery m0 in the present context). Thus, the visualizer VIZ may map voxel points and their values to a grey or color palette or any other visualizing setup. In some embodiments, a rendering algorithm may be used by visualizer VIZ , such as surface rendering algorithm. Such a rendering algorithm may include the marching cubes algorithm, or other, to visualize the reconstructed image data as surfaces in 3D, such as iso-surfaces, or any other.

In addition or instead of so displaying, the reconstructed imagery $m*$, $m$ may be stored in a memory for later review or for other types of processing. Such a memory may include an image repository, such as a database (eg, PACS), or other (preferably) non-volatile data storage arrangement.

The reconstructed volume imagery $m *$, $m$, $m0$ may be manipulated, for example by reformatting, to define cross-sectional planes that are different from the sectional plane defined by the imaging geometry. Such reformatting may allow medical user to better discern tissue type or anatomic details of the internals of the patient, in dependence on the medical purpose at hand, such as for diagnosis or preparation for some type of treatment, etc.

Whilst, as illustrated in Fig. 1, the tomographic imaging arrangement may be an x-ray-based CT scanner, such as is not required herein in all embodiments, as any other tomographic imaging modality such as MRI (magnetic resonance imaging), or nuclear modality such as SPECT, PET, or others still such as Ultrasound (US) or optical coherence tomography (OCT), or any other is also included herein in the remit of the proposed application. Also X-ray based U-/C-arm imagers for interventional imaging are also envisaged herein. In general, imaging purpose and protocols herein are diagnostic or therapeutic, or partly for both, as needed.

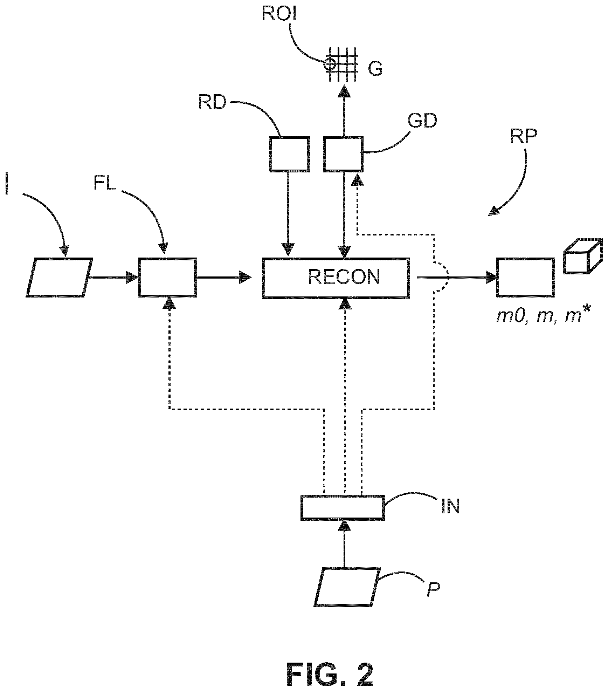

Fig. 2 is a schematic representation of a (tomographic) reconstruction pipeline RP as may be used herein. Thus, the block diagram of the reconstruction pipeline RP illustrates various components, some of which may be optional. Some or each of the components may be controlled by respective parameters $p$, which together form the imaging parameter (setting) $P$.

The projection data $\lambda$ as measured at detector XD along different projection directions $\alpha^d$ is receivable at a projection data input port (not shown) of the pipeline PR. The received projection data is optionally processed by a filter component FL. The filter component FL may be operable as a band pass filter, a low pass filter or a high pass filter, or any other. The filter component FL may be operable as a noise filter to reduce noise in the measured projection data $\lambda$. A noise model may be used such as statistical or any other.

The optionally filtered projection data is processed by a reconstruction component RECON into reconstructed imagery in image domain G. The reconstruction component RECON may implement a reconstruction algorithm.

Reconstructed imagery output by the pipeline RP may include the said initial image m0 (to be explained in more detail below), one or more of the preview images $m=m_j$, or indeed the final image $m *$, which may be one of the preview images once the correct parameter setting P* has been found, or may be different still therefrom. Thus, in some uses cases the parameter settings, as gleaned from the preview imagery, may be used with further parameters adjustments, to then request the final image $m *$ be requested, to so achieve a full, diagnostic reconstruction, etc, as needed. Thus, the preview imagery may not be as such diagnostic. It is sufficient herein that the preview imagery allow user to software tool to assess the adequateness of certain aspects of at least some part of parameter setting.

The reconstructor component RECON may implement one or more reconstruction algorithms to process the projection imagery into imagery in image domain, such as the preview imagery or the final image. Specifically, the reconstructor RECON may compute the final image $m*$ or the preview imagery $m$ as sectional imagery of the examination region (with the patient in it) for diagnostic, therapeutic or other purposes. The reconstructor RECON may be able to produce sectional volumetric image data ("image volume(s)") m*, m. However, this does not exclude producing a single image slice in the examination region as required. Thus, the reconstructed imagery may include the whole volume ER, a partial volume thereof, or a specific section therethrough. Volumetric reconstruction may be facilitated by helical movement, and/or the 2D layout, of the X-ray detector XD.

Any suitable reconstruction algorithm may be used by reconstructor RECON component, such as algebraic, statistical or analytical. Analytical reconstruction algorithm may include filtered back-projection (FBP). Iterative reconstruction algorithms are also envisaged in preferred embodiments.

For example, tomographic reconstruction algorithms as envisaged herein can be formulated as an iterative procedure for improving an objective function. Specifically, the procedure may be formulated in terms of optimization, in particular minimization, of a cost function. The cost function measures how well the estimated imagery in image domain provided during the iterations matches the actually observed projection measurements $\lambda$. A system matrix may be used to forward-project the reconstructed imagery into the projection domain and to compare this forward projection with the actually measured projection data $\lambda$. A deviation between the actually measured data $\lambda$ and the forward projection as per the system matrix can be quantified by the cost function. In the iterations the imagery in image domain is adapted to reduce the cost function $q$, the algorithm thus converging towards the correct imagery. A dual formulation of the above described optimization is also contemplated which includes a maximization of a utility function.

In more detail, an iterative tomographic imaging reconstruction algorithm can be described as follows (excluding any attenuation correction for simplicity):

$$\lambda_e = FP^\alpha[f^i] \tag{1}$$

$$f_i^j = BP^\beta \left( \lambda_e, \lambda m \right) \tag{2}$$

$$f_{i+1}^j = U^\gamma \left( f_i^j \right) \tag{3}$$

wherein:

$\lambda e$ is estimated projection data, such as in list or frame/sinogram mode/format;
$\lambda m$ is projection data measured at detector device XD;
$FP$ is a forward projection operator and may be implemented as a matrix, sometimes referred to as a system matrix, that describes a forward projection from image domain into projection domain;
$BP$ is a backward projection operator that estimates voxel values in grid G from projections;
$f^i$ is the i-th voxel in the imagery in image domain to be reconstructed;
$U$ is an update function that updates voxels $f$ during the iterations $i$.

The nature of $U$ depends on the optimization algorithm used and is implemented by an updater module (not shown). Embodiments of updater function $U$ may include update functions based on any one or more of the following numerical methods or techniques: gradient descent, stochastic gradient method, conjugate gradient, Nelder-Mead expectation maximization (EM), maximum likelihood methods, or any other. The goal in the said optimization is to adjust the voxel values to that the residue as per cost function $q = \| \lambda_m - FP[f^i] \|$ becomes sufficiently small, for example drops under a pre-defined threshold. $\|.\|$ is a suitable similarity measure, such as Euclidean, least squares, or some suitable $L_p$ norm.

In eqs (1)-(3) above, the operators expressed there are a function of certain parameters $\alpha$, $\beta$, $\lambda$ that respectively control the behavior of the respective operator as per eqs (1)-(3), and thus of the reconstruction operation as a whole.

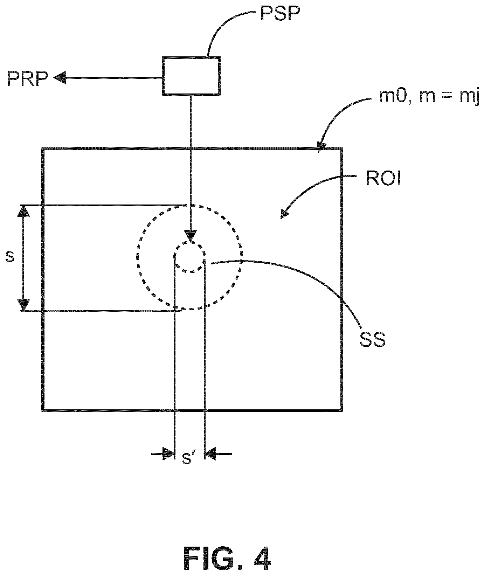

Further optional components of the pipeline RP may include a region of interest definer RD, operable automatically, semi-automatically or manually/user controlled via a user interface UI to so define in image domain G a suitable region of interest ROI. Such region of interest may include a sub-set SS of the image domain (see Fig. 4 below for more details), and associated grid points. The ROI defines the part of the image domain G for which reconstructed imagery $m,m^*$ is sought. As explained in more detail below, this sub-set SS, that is, its location and/or size s' in image domain G may be chosen automatically or may be chosen by user, eg via said UI. The user interface UI may be arranged as a GUI, or other. In some embodiments, it is envisaged to choose said size s' decidedly smaller than the size s recommended by applicable medical imaging protocol -$\ell$. So choosing affords some experimentational latitude to user at low computational cost. Such parameter setting option allows user to break free from the confines of pre-set parameters that may not yield imagery at the expected quality for a specific given patient/case, for whatever reason, such as presentation of unusual constitution, anatomy, or other physiological realities, not fully appreciated and envisaged in the protocol $\ell$/ any pre-set parameter setting in conventional imagers.

In addition , or instead of, such ROI definer RD, a (further) component of the reconstruction pipeline RP may include a grid definer GD that allows defining the size of the voxels making up the image domain, and thus the resolution of the reconstruction. Thus, distances between grid points may form another parameter setting adjustable herein. The grid definer GD may be operable automatically, or in response to user input through a, or the, user interface UI. Again, a GUI may be used, other. The UIs of grid definer GD and ROI definer RD may be combined into a single UI for better ergonomics.

Any of the above mentioned components, such as the filter component FL, the ROI definer RD, the grid definer GD and the reconstruction component RECON may be arranged as separate, discrete, components as shown in Fig. 2. However, this may not necessarily be the case in all embodiments, as the above, "spread-out", layout in Fig. 2 is largely driven by clarity of presentation. Thus, in other embodiments, some or all of the components may be coalesced into fewer components by integration or combination, or even into one single component. For example, the filter element component FL is sometimes part of the reconstruction algorithm implemented by the reconstruction component RECON.

Operation of each or some of the said pipeline PR components may be a function of the said imaging setting parameters P. The preview system PVS envisaged herein may thus include an interface IN through which different such parameter settings P can be provided, and fed into the reconstruction pipeline RP. The preview system may allow controlling operational behavior of the pipeline. Thus, the interface IN populates memory placeholder (free parameters) the various components with the received parameters P and so sets them to certain values p, thus controlling operational behavior of the pipeline PR. Such parameters that make up a parameter setting P of interest herein may include parameters of the noise model and/or of the reconstruction algorithm, such as any one of $\alpha,\beta,\lambda$ in eqs (1)-(3) above, and others still, as will be explained in more detail below.

The parameter settings P received at the input port IN may by requested by user through the user interface UI. Instead, or in addition, the parameter setting(s) may be provided automatically, for example by a segmentation unit SEG that segments the initial reconstructed image $m_0$ Thus, in some embodiments, the preview system PVS may in fact operate based on an initial reconstructed image $m0$, such as a scout/surview image or any other. In such scout image $m0$, usually a larger than needed region of interest is reconstructed, such as a whole body zone, such as abdomen, etc, although only a part of such zone is of interest, such when imaging for the liver for example. However, this surview image $m0$ is obtainable at a much lower dose than the dose required by medical protocol in order to obtain the diagnostic image $m^*$, thus the scout image is not diagnostic. In addition or instead, the grid G for initial image $m0$ is set for a lower resolution, in order to save computation time. Such initial image may m0 may be visualized on display DD, and can be used for visual assistance of user when they attempt defining ROI or grid geometry, such as via grid definer GD or ROI definer RD. However, such an X-ray based initial image $m0$ is not necessarily required herein in all embodiments. Thus, in some embodiments, the user may set or define, through the ROI definer RD and/or the grid definer GD, sample regions "blindly" as may be done by an experienced operator, whilst the patient resides in the examination region. Thus, the user may use their medical/anatomical knowledge to ascertain the region he or she wants to sample for different parameters settings directly from the manner in which the patient is residing in the examination region. Optionally, a video camera may provide further details of the patient, and such video footage may be used by user to estimate and set the sample ROI, for example.

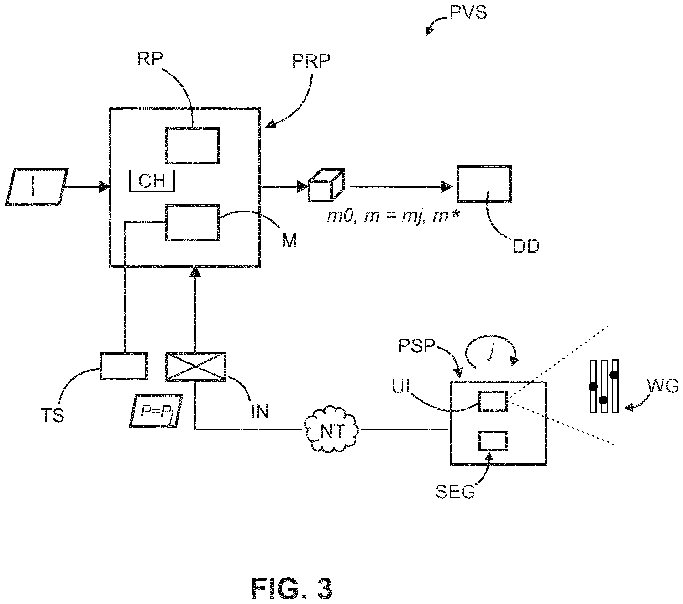

Fig. 3 shows in more detail components of the preview system PVS which may be used to produced preview imagery $m$ in a preview phase, prior to reconstruction of final image $m^*$. The multi-directional measured projection data $\lambda$ is received at a preview provider PRP of preview system PVS.

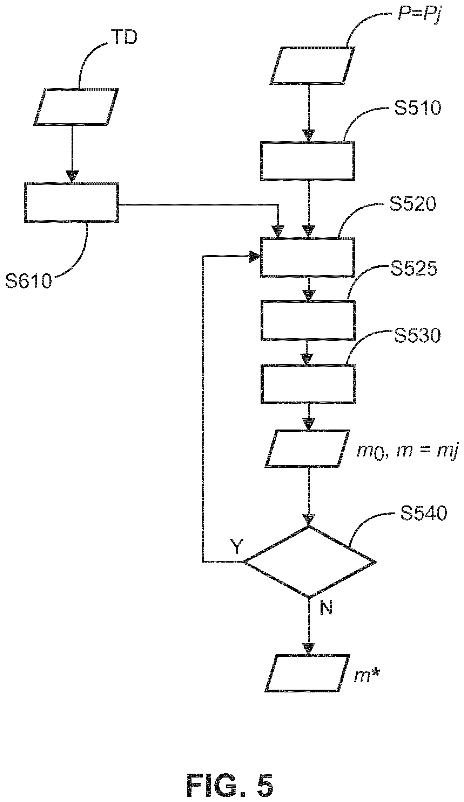

The preview provider PRP may in some instances include some or all of the components of reconstruction pipeline RP, for example may include in particular the reconstruction component RECON or other components. However, in other embodiments the preview provider PRP does not include the pipeline RP, or at least not fully so, but includes instead another dedicated computational component that can be operated computationally cheaper than the reconstruction component RECON, or the pipeline RP more generally, of the purposes of preview $m$ production. For example, in some embodiments, the preview provider PRP may be implemented as a trained machine learning ("ML") model M, which was previously trained on training data by an ML training system TS, as will be explained in more detail below at Fig. 5. Instead of using the pipeline PR, it is the machine learning model M based embodiment of the preview provider PRP that is used to sample parameter space and to estimate preview imagery for different parameter settings until a satisfactory (also referred to herein as "final") parameter setting P*, and hence satisfactory (final) image is found. At least at part of the satisfactory parameter setting associated with satisfactory preview image may then be passed on to pipeline RP to have the final image m* reconstructed there. Hence, in this embodiment, the machine learning model M is used to sample various such parameter settings P, and related preview imagery, but the final image m* is then computed at the pipeline PR using the final/satisfactory parameter settings P* so found, and possibly using further parameter settings, such as to effect a full reconstruction, in any one or more of size, convergence and resolution, etc. In other embodiments, without such trained model M, the pipeline is used itself for both, sampling/computing the preview imagery, and for computing the final imagery, if not already among the preview imagery. Using a separate ML model may afford computational advantages over an analytical reconstruction via the pipeline PR. For example, the model M may be arranged as an at least partly (such as fully) convolutional neural network (CNN). Such CNNs s have been found to allow producing (preview) imagery quickly, and with low CPU time. For example, some computations involved during operation of such CNN-based model M in deployment (post training) may include vector or matrix operations, which can be parallelized, such as when run on multi-core chipsets, such as GPUs (graphical processing unit) or others, and such as indeed envisaged in embodiments. Whilst training the model may incur more computational resources, this is usually done beforehand, in a training phase, preceding the deployment phase when the trained model is used, such as in clinical practice.

With continued reference to Fig. 3, the plural parameter settings P=Pj may be provided as said through the said parameter interface IN as discussed above at Fig. 2. A multiplexer/multi-way interface IN, or multiple interfaces may be used, when the preview provider includes the trained model M, as in such case the parameter settings P = Pj are passed first to the model M for computing the preview imagery, whilst the final parameter setting is then passed on to the pipeline for reconstruction of final image m*, as mentioned earlier.

Optionally, the preview provider PRP may compute initially the initial image m0 to assist ROI definer RD and/or grid definer GD. Most importantly however, preview images mj at different received parameter settings *Pj* are computed by preview provider PRP, possibly in sequence or in parallel. The preview imagery *mj* may be displayed on display device DD, suitably visually rendered, or otherwise displayed. A user can examine the preview imagery mj visually or by using analytical tool(s), in order to establish whether the so obtained preview image is at least in some aspect of interest indeed sufficient for the intended medical purpose. If it is, user may select one or more of the preview images, and may adopted same as the final image m*. However, as said, in some embodiments, although one of the preview images may be satisfactory in some aspect of interest, the parameter settings associated with that image may be re-used in a final reconstruction with additional parameter settings, for example to so effect a higher resolution, or reconstruct for a larger region of interest, as obtainable by setting the region definer RD and/or the grid definer GD accordingly. One such scenario where the, user or automatically identified, parameter settings are re-used in a follow up final reconstruction with other parameter settings is described below at Fig. 4 for example, and to which reference is made later in more detail.

In some embodiments, CPU time savings are realized by having the preview provider PRP not perform the computations to full convergence, such as in iterative image reconstructions. Thus, during the preview stage as implemented by the preview system PVS, the iterations in the reconstruction algorithm are aborted prematurely at user request, for example by sending an abort signal through user interface. The signal to passed via control interface IN or other interface to the pipeline PR. Such signal may be issued automatically, or after pre-set amount of iteration cycles, which are less than would be normally used according to protocol in a conventional setup with pre-set parameter setting. This is because a fully converging reconstruction is not needed to merely sample various parameter settings as intended. The user may be able to judge adequacy of the settings well before convergence sets in. By aborting the reconstruction earlier, the expending of valuable CPU time on possibly inadequate imagery can be avoided. For example, in some embodiments it may be sufficient to sample the image structure, such as texture, at a small region of interest in order to assess image representation of a tissue type of interest, to so gain a sufficient understanding on the correct parameter settings, once this has been found by examining the preview imagery as per their respective associated parameter setting. The interface IN may then instruct the reconstruction pipeline to now reconstruct in full the final image M* using the found correct parameter setting. It should be noted that in the above example and others, intermediate imagery reconstructed for a given parameter setting may be preferably displayed during some or any given ongoing iterative reconstruction, with repeated updated of what the preview imagery being displayed. Thus, dynamic footage is being displayed, with intermediate imagery transitioning, one to the next, until the abort signal is received, once the user has learned enough detail to judge whether such a reconstruction based on the current parameter setting would indeed serve their needs, or not. Thus, parameter settings may also include the run-time/number of iteration cycles of an iterative reconstruction algorithm in some embodiments. The above may also be applied to other algorithms, other than iterative, that allow access to some intermediary imagery.

In some embodiments, the parameter settings may not only include example parameter settings as explained above at Fig. 2, but may for example further, or in addition, define a sparseness of the projection data set $\lambda$. Thus, using fewer projection frames by skipping some of them, may allow for faster, more responsive computing of the preview imagery. Thus, in this parameter setting, only some of the projection data is used, rather than using the full set of acquired data, such as a set with angular range of projection directions $\alpha^d$ of 180° or more. Thus, in some embodiments, only a limited angular range of less than 180° is used to achieve computational feasibility, with fast response times as may be envisaged herein. Such setting may be useful if effects of other parameters on reconstructed imagery are of interest, and if such effects are still manifest even though a limited angular range is used. Once a parameter setting is found that yields satisfactory IQ in respect of the effect of interest, the parameter setting can be fixed and the full or larger set of projection data can then be used to have the final image reconstructed in a subsequent reconstruction, using the said fixed parameter setting, in addition to other settings (eg, the full angular range of the projection data) in the subsequent final reconstruction. A similar approach with partial fixing of parameter settings in the preview stage and then requesting a full reconstruction based on the fixed parameter settings in conjunction with other parameter settings may be done when experimenting with small ROI reconstruction, and/or low resolution preview, etc, reconstructions. Here too, a full reconstruction with higher (eg, full) resolution and/or larger (full) ROI. less sparse of full projection data may be requested to actually obtain the final image m*. Thus, in this or similar situations, the final image is in general not among the preview images, although the final image will inherit at least some of the parameter settings that related to the effect the user was experimenting with in the preview phase. Such parameter settings, such as the said resolution, ROI size, projection data sparseness, etc, may be referred to herein as "booster" settings, that allow accelerated reconstruction of the preview imagery. Such booster settings may be used in conjunction with other parameter settings ("parameter setting(s) of interest") that may define texture or other imager structures and that are of main interest in the preview phase, and such parameters may be fixed/stored. When booster settings are used, the final image is usually not among the preview images, but a subsequent reconstruction is done, with booster parameters reset to improve image quality (low/no sparseness, higher resolution, larger ROI; etc), whilst the parameter of interest found in the preview phase are retained in the full reconstruction.

Thus, as will be apparent from the above, the term "parameter setting" as used herein may be understood a set of parameter (value(s)), some of which may be booster(s), and some of which may be parameter(s) of interest. The format of the parameter setting may be any suitable data structure, such as list of numbers/symbols/codes, a sequence of such, a vector of such, a matrix of such, an associative array of such, etc. In particular if the mentioned machine learning model M is used, the arrangement of the parameter in such data structure may be defined in any way, but should then preferably be retained for consistency in training, and the parameter settings should be fed into the model during deployment in such format as trained for best results. For example, in CNNs, arrangement of input parameter settings as vector, matrix, tensor, etc may be preferable for better integration with parallel processing setups, such as in multicore chipsets, where vector/matrix/tensor operations may be used with benefit, as mentioned above. Thus, a "single instruction, multiple data" (SIMD) setup may be harnessed herein in some embodiments.

The preview system PVS may further include a parameter setting provider PSP. The parameter setting provider PSP may include the said user interface UI, and/or a segmenter SEG, or both, or other components operable to set at least some of the parameters in a parameter setting. The parameter setting provider PSP may provide multiple such parameter setting over plural cycles, as needed.

The user interface UI of the parameter setting provider PSP may be a graphical interface with one or more viewports, and thus may co-operate with the visualizer VIZ to instruct same, by suitable event handling, to visualize some or each preview image mj obtained for each parameter setting Pj. The preview imagery mj may be displayed in sequence one after the other, or some or all may be displayed concurrently in multiple of the said ports/view panes, as needed.

As said, the user interface UI may be graphical and may include suitable one or more graphical UI widgets WG that are configured for interactivity. For example, such widget WG may be configured to allow user to define/set the parameter settings. For example, sliders, buttons, or any such may be used. For example, each parameter may have its own slider or other GUI widget, which allows the user to set the parameter value by interacting with such slider, for example by dragging same to different positions, either using a pointer tool such as mouse, stylus etc, or by touchscreen action. Each such position may correspond to a different parameter setting. The slider may be displayed/visualized against a scale, suitably numbered, thus allowing the user to set the parameters with the requisite precision. Event handlers may be used to store the corresponding parameter setting in the corresponding data structure, for dispatch to preview provider PRP via interface IN, with a request for respective reconstruction based on the so revived parameter setting.

Suitable parameters $p$ for each parameter setting Pj may include one or more parameters of the noise model, one or more parameters of the reconstruction pipeline, in particular, of the reconstructor RECON in itself such as certain parameters any one of parameters $\alpha, \beta, \gamma$ (see eqs (1-3) above) of the reconstruction algorithm, and as said, the size of the grid, the number of projection data frames to be used, the size of the ROI to be reconstructed in image domain, the number of iteration cycles, etc. Other parameters for the parameter setting may include regularization parameters, strength modulators such as me be configured in a denoising /noise suppression algorithm of the filter FL, or in the iterative reconstruction algorithm used by reconstructor RECON. Further parameters may include Shape parameters of the cost/utility function $q$ as may be used in the iterative reconstruction algorithm by reconstructor RECON Such parameter(s) control behavior of updater function $U$, etc. In addition or instead, the parameters may include filter coefficients of the filter component FL. Another type of parameters in the settings P may set the type of algorithm, for filtering and/or reconstruction, to be used. Thus, the user may wish to try different types of such algorithms to asses imagery, eg in terms of quality, texture, or other characteristics, such as noise characteristics, etc. The above list of parameters are merely illustrative and non-exhaustive. In general, the parameter(s) in the setting are such that they/if influence the result of preview system PVS output mj. Each or some of the above listed parameters may set in any combination and subset, as needed.

Instead of, or in addition to user interaction, some or all such different parameter settings Pj may be set automatically, for example by segmenter SEG. For example, the segmenter SEG may segment the initial image m0. For example, based on the segmentation, region definer RG and/or the grid definer GD may set ROI size and/or resolution, or any other of the parameters than make up the given setting P=Pj. In some embodiments, applicable protocol $\ell$ is read in and this is used to set the parameter settings Pj. As an aid to speed up the parameter setting, certain associated default settings may be used, but the user may be able to change any of those prior to dispatch via interface IN for preview imagery reconstruction. For example, the system PVS may have defaults sets as an initial selection to the used. E.g. in a head acquisition, a soft tissue brain region is chosen based on the segmentation. In an abdominal acquisition, a (small) liver ROI is chosen. In a cardiac acquisition, a segmentation ROI for one or more heart chambers is chosen, etc. However, user has the option in preferred embodiment to choose any ROI, irrespective of the segmentation, or may chose different segmentation ROIs, as needed. The segmentations of the initial image m0 may be displayed for this, with the user interface UI configured to allow interactive selection or tweaking, as needed.

The parameter setting provider PSP, once it provides a given parameter setting Pj, an associated signal is passed to the preview provider PRP via interface IN to cause the provider PRP to provide the corresponding preview image mj, associated with the respective parameter setting Pj so reviewed. In preferred embodiments, once such a signal is issued by the parameter setting provider PSP to have a new preview image $m_j$ reconstructed based on new parameter setting Pj, the current computation of the current preview image $m_{j-1}$ is interrupted, and computation commences on the requested new preview image $m_j$. Thus, a dynamic interleaving with parameter relaying is implemented in some embodiments for yet better responsiveness. Thus, even for a given cycle in the preview image sampling, not all computational cycles may need to run to the end until preset convergence, as these may be aborted at any time by the user through the parameter setting provider by providing a new updated parameter set or by simply issuing an abort signal as mentioned earlier. If aborted prematurely by such signal, the so obtained intermediate preview image may be displayed. It may be used as initial value for the next computational cycle for the next parameter settings as this may speed up even more the reconstruction. Thus, the reconstructor component RECON may re-use the currently populated voxels for an earlier parameter setting/preview image, and use same when computing the updated preview image mj for the next parameter setting Pj, and so forth. However, in some other embodiments, there is no such interleaving with interrupts, and some or each computation for a respective current preview images is allowed to terminate, before the next one commences for the next parameter setting. Thus, the parameter settings received may be buffered and processed in turn. In yet other embodiment, parallel event handling with threading is used, and several preview images may be computed in parallel, once more than one parameter setting is received.

Depending on the computational burden of the pipeline component/algorithm whose parameter one wishes to tune/set, a (pre-)caching via a (memory) cache CH may be envisaged which may speed up providing several of ones of plural requested preview results mj, thus enabling a yet improved live preview feature/experience. Depending on the application, it may be useful to force pre-caching for an apt choice of algorithm parameters, eg, for a number of different denoising strengths settings, etc. Thus, such caching may be done before displaying or otherwise providing the preview imagery to the user. In this manner, the preview operation itself can be accelerated, thus enhancing the live experience/viewing comfort for the clinical user.

As also shown in Fig. 3, parts of the preview system PVS may be implemented remotely from other components of the preview system. For example, the parameter setting provider PSP may be a thin-client component and may be run on another computing device, other than where the other parts of the preview system are run. More particularly, computational demand on the preview provider PRP may likely be high and this component may be run on a more powerful computing device, such as one or more server components, possibly implemented in a distributed computing facility to balance/share the load, for example among hospitals or other medical settings. In distinction, the preview setting provider PSP may be run as the said thin-client on a less powerful computational device, such as on a smart phone, laptop, smart watch, tablet or any other user terminal equipment usable by the clinical user. The parameter settings are then transmitted through a suitable network NT and said interface IN to the preview provider PRP for computing the respective reconstructed imagery, and for operation as described above. Interface IN may be arranged at either preview setting provider PSP or the preview provider PRP, or partially at both.

In some embodiments, at least a part of the parameter setting provider PRP, such as the said user interface UI, graphical or not, may be integrated in the operator console OC of imager IA, or may be integrated into the imager supporting computing system CS, as needed.

Fig. 4 illustrates the above mentioned parameter setting for the example of ROI size s, that is, the size s of region of interest in image domain G to be reconstructed. For example, in the initial image m0, or in a visualization of the image domain grid G, the user may set a sub-set SS as the region of interest. Whilst the medical protocol $\ell$ for the image task at hand may prescribe a certain minimum size s for the region of interest, such as of the liver or any other organ/organ part of interest, the user, thanks to the proposed system PVS, may use a decidedly smaller size setting $s'$ for subset SS, a mere "speck", comprising merely a small number of voxels, Alas, such may be sufficient for user for sampling image properties, to "get a feel" for image structure, texture, and/or other image structure properties, associated with the currently set parameters, the parameters of interest that is. The small ROI as illustrated in Fig. 4 is an example of a booster setting as mentioned earlier. It allows user to sample the parameter(s) of interest, for example parameter(s) that may have a bearing on the image texture for in-image tissue representation, such as of liver tissue. Such sampling can be done computationally cheap, thanks to the booster setting, in this case, the small ROI. Fewer voxels need be considered by the reconstruction algorithm, thus resulting in faster return of the preview image. If a suitable parameter setting is found in terms of image texture, a full reconstruction can then be requested, with booster setting ROI now reset to full/larger size, and embedded in the final parameter setting P*, where the found parameter(s) of interest (eg, for the liver texture) is/are retained. Thus, a full/final reconstruction may be done by passing the parameter setting P*, including the retained parameter(s) of interest, and booster reset ( eg, larger/full reconstruction region of interest, now according to protocol), to preview provider PRP in order to so compute there the final image m*.

The sampling size $s'$, possibly in deviation from what protocol $\ell$ mandates, may be merely a few voxels across, such as 27 voxels, 64, etc. The number of voxels for size $s'$ are purely for illustration of the order of sizes involved, and are not limiting herein in any way. The minimum size may be a function of image noise. More specifically, the minimum sample size may be calculated by statistical methods for a predetermined confidence interval for certain quantitative parameters, but for most cases may be given by experience of the user. Reconstructed images are mostly viewed in a slice format: in this case, the number of voxels in slice direction may be even as low as one, but in the lateral directions the minimum number of voxels may be higher.

Reference is now made to the flow chart of Fig. 5 which illustrates steps of a method of facilitating tomographic imaging by preferably computing, in a computationally cheap manner, preview imagery at one or more different parameter settings Pj. Such preview imagery mj may be computed cheaper than per medical protocol set for the imaging task at hand.

Such a parameter setting may be received at step S510, either a single setting, or, if plural, in sequence or in parallel, such as in batch/threaded processing.

At step S520, a request is send to have a preview image computed, based on the received parameter setting. A step S525 the preview image is reconstructed based on the received parameter setting.

This preview image is then provided at step S530 for storage or any other, but preferably for display on a display device for visual inspection by a user or by automatic inspection by analyzer software, or any other.

An initial image m0 may be reconstructed and displayed. This initial image has preferably a low resolution, so it can be produced quickly, and may assist user in setting the parameter(s), such as ROI size, etc, as receivable at step S510. The initial image may be surview image, reconstructed from lower dose projection data (not shown), different from and of lower dose than the higher dose diagnostic projection data $\lambda$.

At step S540, the user may inspect the preview image in order to assess whether the associated parameter setting is indeed sufficient. User may issue a suitable signal via a user interface UI. The signal may indicate that the current preview image, thanks to the current reconstruction parameter setting, is satisfactory. The signal may cause the current image to be adopted as the final image M*, and this be output for storage or view.

Alternatively, the current preview imagery is not so adopted. Rather, the so found parameter settings are parameters of interest, and these are now embedded with other parameters in new, eg, final, parameter setting P*. Such other parameters may include booster parameters as used for one or more of the previews *mj,* but are now reset before use in the final reconstruction. Such reset booster parameters may include any one, or, more, of larger ROI size and/or higher grid resolution, full/less sparse projection data. The final reconstruction may then be run, based on the new parameter setting P*. The final reconstruction may be run until full convergence is obtained, to so obtain the best final image result m*.

If, however, it is found at step S450 that the preview imagery is not satisfactory, some or all of the associated current parameter setting(s) therewith are discarded, and new parameter settings may be provide/received at step S510, and the above steps are repeated, until a satisfactory image m* has been found in this way, as detailed.

In the above decision logic at step S540, instead of, or in addition to, user involvement, this step S540 may be automated. For example, an analyzer tool (eg, ML based, or based on statistical analysis, etc) may analyze the preview imagery for compliance. If so automated, no displaying is needed, but may still be done to keep human user in the loop. For example, decision by analyzer tool may be displayed for vetting/conformation by human user.

New parameter settings may be received whilst reconstruction based on a current parameter setting is received. In such case, and in some embodiment, current reconstruction operation may be aborted, and new reconstruction, based on new parameter setting commences. This allows obtaining final result m* quicker, as user may be able to judge adequateness of preview imagery before current reconstruction operation terminates. Intermediate image results may be displayed during ongoing reconstruction in such embodiments.

As mentioned earlier, the reconstruction at step S520 based on the current parameter settings may be done by an analytical reconstruction component as part of the reconstruction pipeline. The method may allow repeated interfacing with the reconstruction pipeline and to cause new reconstructions of preview imagery, each corresponding to a respective new parameter setting as received. The method is thus capable of dynamic preview support.

However, such recon-pipeline interfacing for reconstruction of preview imagery may not necessarily be required in all embodiments. Thus, in some embodiments, preview imagery is provided at S520 by a computational entity distinct from the reconstruction pipeline. For example, in some such embodiments the preview imagery mj at step S520 is provided by a suitably trained machine learning model. Such ML model may be operable to predict the respective preview images given the current parameter setting. For example, an artificial neural network, preferably of the convolutional type, may be used. Such NN reads in at its input layer the current parameter set, packaged in a suitable format, such as a vector, matrix or any other. The input data and is then propagated through layers of the neural network to obtain at its output layer as an estimate, the reconstrued preview image. The output is an estimate of how the reconstruction may have looked like, if the current parameter setting had been used in the reconstruction pipeline RP. Thus, in this embodiment the input projection images are regressed into a predicted image. Generative machine models may be used such as GANs or any other. See Goodfellow et al in " Generative Adversarial Networks", available online at arXiv:1406.2661 [stat.ML], published 2014.

If such an ML generated preview image mj is found satisfactory, its associated parameter setting (the one that was fed into the model to elicit the prediction mj) may then still be fed into the pipeline PR to obtain there the actual final image m* analytically, without ML.

In the first case , where the recon-pipeline PR of system CS is used in step S520 for computing the preview imagery, the computational savings may be achieved by booster settings, such as for example, by not running the reconstruction to full convergence, by providing a much smaller region of interest to reconstruct than is sanctioned by the protocol and/or having the grid chosen courser for lower resolution, than would normally (that, as per protocol $\ell$) be the case for medical imaging task at hand, using sparseness, etc.

However, in other embodiments, where the ML model is used to compute S530 the preview images, computational savings and/or responsiveness may be achieved, instead or in addition, by having the suitably trained machine learning model run in parallelized fashion, preferably on dedicated multi-core chipset(s), such as said GPUS, etc, to predict the respective preview images, given the current parameter setting. It has been found, that such NNs, such as CNNs or other, in generally return results faster than analytical reconstruction algorithms as may be used in the pipeline PR.

Preferably, deep learning-based ML models, such as NN/CNN, models, are used, with plural, or at least one, hidden layer between input and output layer. Contextual data $\kappa$ may be processed by model M together with the parameter setting. The contextual data $\kappa$ may include the low-res initial image m0. Thus, the low-res image m0 may be used as data-based regularizer channel for the machine learning model M. Such may allow the model M finding a good prediction as to how an image at the given parameter settings may have looked like under analytical reconstruction for the image task at hand. In other embodiments, or in addition to such initial image, the contextual data may include patient characteristics and/or indications of the image task at hand, such as medical protocol codes, etc. Use of the contextual data $\kappa$ data in such manner may allow more realistic predictions, than merely predicting on the basis of parameter settings as such. Thus, in some embodiments, a bank of models is provided to provide a separately trained model for each of image task, protocol, region of interest, organ of interest, etc. The initial image, instead of, or in addition of being low-res, this image may be reconstructed from a low dose projection data, acquired before or after the diagnostic projection data $\lambda$ as used above. The radiation dose for the diagnostic projection data $\lambda$ is higher (and is per protocol) than the dose used for acquiring the further set of projection data, from which the initial image m0 may be reconstructed.

In the machine learning based model embodiment, there may be a step S610 where the applicable model or models are trained based on training data TD. Back-propagation methods or any other training algorithm, gradient-based or not, may be used. The training may be supervised, semi-supervised, self-supervised, or unsupervised as needed. The training data may be obtained from existing image stock as may be found in image databases such as a PACS, or any other image repositories in one or more hospitals. Oftentimes, in most, if not all current tomographic imaging setups, the reconstruction parameters are preset and can be read-out from system files, specification sheets, etc.

Training data procurement, even for a supervised learning setup, may be straight forward in some cases, as the reconstruction parameter setting used for the respectively stored imagery in historical image data repositories is usually stored alongside the imagery, or can be queried from other places in the database, from system settings, imaging log files, etc, or are indeed included as meta data in the image data itself, such as in those stored in certain formats, such as DICOM, etc. Thus, training input data (X) and associated target(s) (Y) may be found from retrieving the reconstruction parameter setting (X) used for the respective historic image Y found in the database, to form pairs of training data (X,Y). Model parameters $\theta$ of ML model M may thus be adapted to that model output $M^{\theta}(X)$ matches, within a defined margin, the associated target Y. A training objective function, such as a cost function, may be used to quantify the match. The model parameters $\theta$ of model M are adapted by training algorithm to improve the objective function. The training may proceed iteratively. Once trained, the model can be used in step S520 in deployment, and according to some embodiments.

Whilst in the above, use of the pipeline PR or of the trained machine learning model M was presented largely as alternatives for computing the previews *m*, a combined "hybrid" use of recon-pipeline PR and such trained ML model M is also envisaged in some embodiments: in such hybrid setup, interface IN may be controlled by user to selectively have the preview *m* imagery computed either by model M, or, in addition or instead, by the analytical pipeline PR. Thus, some previews may be ML generated, others may be computed analytically by pipeline PR, as desired by user.

The components of the preview system PVS may be implemented as one or more software modules, run on one or more general-purpose processing units PU such as a workstation associated with the imager IA, or on a server computer associated with a group of imagers.

Alternatively, some or all components of the preview system PVS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the preview system PVS may be implemented in both, partly in software and partly in hardware.

The different components of the preview system PVS may be implemented on a single data processing unit. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

**Claims**

1. System (PVS) for facilitating tomographic image reconstruction, comprising:

    an input interface (IN) through which is receivable a parameter setting ($P$) for a tomographic reconstruction pipeline (RP) for reconstruction in image domain, based on projection data ($\lambda$) collectable by a tomographic imaging apparatus (IA);
    wherein on receipt of parameter setting ($P$) the said interface is capable of causing a preview provider (PRP) to compute at least one tomographic image ($m$), including at least one preview tomographic image associable with the received parameter setting ($P$), the at least one tomographic image being for display on a display device (DD).

2. System of claim 1, configurable for dynamic preview support, wherein the interface (IN) is capable to repeatedly cause reconstruction of different such preview images on receipt of different such parameter settings.

3. System of claim 1 or 2, wherein the different such parameter settings include a final parameter setting associable with a final image ($m^*$), including at least some of the parameter setting of at least one of the preview images ($m$).

4. System of any one of the preceding claims, wherein the parameter setting ($P$) or the different such one or more parameter settings, include one or more parameters for any one or more of i) definition of a subset in an image domain for the at least one tomographic image is to be reconstructed; ii) a resolution in image domain for the tomographic image, iii) a filter/de-noising component of the pipeline, iv) a reconstruction component (RECON) of the pipeline, the reconstruction component capable of mapping the projection data from projection domain into voxel positions in the said image domain.

5. System of claim 4, wherein said subset is smaller than a size of a region of interest, ROI, in respect of which the, or a, final image ($m^*$) is to be reconstructed.

6. System of any one of the preceding claims, wherein the parameter setting is provided by parameter setting provider (PSP), such as a segmentor (SEG) and/or a user interface (UI).

7. System of claim 6, wherein the user interface (UI) is capable of user interactive operation so as to allow the user to repeatedly define the different parameter settings.

8. System of any one of the previous claims, wherein the preview provider (PRP) includes at least a part of the reconstruction pipeline (RP).

9. System of any one of the previous claims, wherein the preview provider (PRP) includes a trained machine learning model (M).

10. System of any one of the previous claims, wherein the imaging apparatus includes any one of: i) a computed tomography scanner, a C-arm imaging apparatus, a magnetic resonance imaging apparatus, an imaging apparatus configured for nuclear imaging, optical coherence tomography imaging apparatus, ultrasound imaging apparatus.

11. An arrangement (IAR) for imaging support, comprising the system of any one of the previous claims, and further comprising any one of more of: i) the imaging apparatus, ii) a graphics display generator for visualizing the one or more preview images on the display device, iii) the display device, iv) at least a part of the reconstruction pipeline, v), the preview provider (PRP), vi) the parameter setting provider (PSP).

12. Method of facilitating tomographic image reconstruction, comprising:

   receiving (S510), through at least one interface, a parameter setting ($P$) for a tomographic reconstruction pipeline (RP) for reconstruction in image domain, based on projection data ($\lambda$) collectable by a tomographic imaging apparatus (IA);
   On receipt of receipt of such parameter setting ($P$), causing (S520) to compute at least one tomographic image ($m$), including at least one preview tomographic image associable with the received parameter setting ($P$), the at least one tomographic image being for display on a display device (DD).
   Method of training (S610) the machine learning model (M) of claim 9.

13. A computer program element, which, when being executed by at least one processing system (PVS), is adapted to cause the processing system to perform the method as per one of claims 12 or 13.

14. At least one computer readable medium having stored thereon the program element of claim 13, or having stored thereon the machine learning model (M) as per claim 9.

15. Use of an interface (IN) in tomographic reconstruction of tomographic preview imagery, the interface being such that through it is receivable a parameter setting ($P$) for a tomographic reconstruction pipeline (RP) for reconstruction of such preview imagery in image domain, based on projection data ($\lambda$) collectable by a tomographic imaging apparatus (IA).

**FIG. 1**

**FIG. 2**

**FIG. 3**

**FIG. 4**

**FIG. 5**

Europäisches
Patentamt

European
Patent Office

Office européen
des brevets

# EUROPEAN SEARCH REPORT

Application Number

EP 23 19 9953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 147 644 A1 (GE PREC HEALTHCARE LLC [US]; UNIV LELAND STANFORD JUNIOR [US]) 15 March 2023 (2023-03-15) <br> * abstract * <br> * figures 1,2 * <br> * paragraph [0016] – paragraph [0131] * <br> ----- | 1-15 | INV. <br> G06T11/00 |
| X | US 2018/184992 A1 (LI HONGDI [US] ET AL) 5 July 2018 (2018-07-05) <br> * abstract * <br> * figures 4,6,8 * <br> * paragraph [0087] – paragraph [0142] * <br> ----- | 1,12-15 | |
| X | EP 4 160 546 A1 (KONINKLIJKE PHILIPS NV [NL]) 5 April 2023 (2023-04-05) <br> * abstract * <br> * figures 5,6 * <br> * paragraph [0045] – paragraph [0181] * <br> ----- | 1,12-15 | |
| X | JP 2018 057694 A (CANON KK) 12 April 2018 (2018-04-12) <br> * abstract * <br> * paragraph [0042] – paragraph [0094] * <br> ----- | 1,12-15 | TECHNICAL FIELDS SEARCHED (IPC) <br><br> G06T |
| X | US 2019/231296 A1 (JACKSON JOHN IRVIN [US] ET AL) 1 August 2019 (2019-08-01) <br> * abstract * <br> * figure 3 * <br> * paragraph [0034] – paragraph [0064] * <br> ----- | 1,12-15 | |

The present search report has been drawn up for all claims

| Place of search | Date of completion of the search | Examiner |
|---|---|---|
| Munich | 13 March 2024 | Leclercq, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## EP 4 530 986 A1

### ANNEX TO THE EUROPEAN SEARCH REPORT
### ON EUROPEAN PATENT APPLICATION NO.

EP 23 19 9953

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | Publication date | Patent family member(s) | | Publication date |
|---|---|---|---|---|---|
| EP 4147644 | A1 | 15-03-2023 | CN | 115797252 A | 14-03-2023 |
| | | | EP | 4147644 A1 | 15-03-2023 |
| | | | US | 2023080631 A1 | 16-03-2023 |
| | | | US | 2023081601 A1 | 16-03-2023 |
| US 2018184992 | A1 | 05-07-2018 | EP | 3632326 A1 | 08-04-2020 |
| | | | US | 2018184992 A1 | 05-07-2018 |
| | | | WO | 2018120061 A1 | 05-07-2018 |
| EP 4160546 | A1 | 05-04-2023 | EP | 4160546 A1 | 05-04-2023 |
| | | | WO | 2023052507 A2 | 06-04-2023 |
| JP 2018057694 | A | 12-04-2018 | NONE | | |
| US 2019231296 | A1 | 01-08-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GOODFELLOW et al.** Generative Adversarial Networks. *arXiv:1406.2661 [stat.ML]*, 2014